# EUROPEAN PATENT APPLICATION

(11) **EP 4 556 439 A1**
(43) Date of publication of application: **21.05.2025**
(21) Application number: 23219070.2
(22) Date of filing: 21.12.2023
(51) Int. Cl.: C01B 25/37, C01B 25/45, H01M 4/58

(54) **PREPARATION METHOD OF IRON PHOSPHATE PRECURSOR FOR BATTERIES**

(30) Priority: 20.11.2023 TW 112144672
(71) Applicant: Advanced Lithium Electrochemistry Co., Ltd., Taoyuan City 330 (TW)
(72) Inventor: Fu, Kuan-Yin, 330 Taoyuan City (TW); Wang, Jing-Xuan, 330 Taoyuan City (TW); Huang, An-Feng, 330 Taoyuan City (TW)
(74) Representative: 2K Patentanwälte Blasberg Kewitz & Reichel

(57) **Abstract**

A preparation method of an iron phosphate precursor for batteries is disclosed and includes steps of: (a) providing an iron powder, wherein the iron powder has an apparent density of iron powder ranging from 2.3 g/cm³ to 2.6 g/cm³, and a particle size composed of a first particle-size range and a second particle-size range, the first particle-size range is greater than the second particle-size range, and a weight of the iron powder in the second particle-size range accounts between 10 % and 30 % of the total weight of the iron powder; (b) providing a phosphoric acid to react with the iron powder to generate a first product; and (c) heat-treating the first product in an air or oxygen atmosphere to form the iron phosphate precursor.

## Description

### FIELD OF THE INVENTION

The present disclosure relates to a preparation method of a cathode material, and more particularly to a preparation method of an iron phosphate precursor for batteries.

### BACKGROUND OF THE INVENTION

Due to the sustained global energy shortage, the price of oil becomes higher and the environmental consciousness rises day by days. The most popular subject of the energy industry is how to provide a clean and effective energy. In a variety of alternative energies, the chemical battery is the most actively developing technology. With continued investment in research and development of related industries, the chemical battery technology is not only continuously improved and enhanced, but also widely used in our daily life, such as consuming electronics, medical equipment, electric bicycles, electric motorcycles, electric cars and electric buses.

Particularly, the Lithium Ferric Phosphate (LiFePO₄, hereinafter referred as "LFP") composite batteries are widely accepted by the market because of the large current and long life cycle. Also, the LFP composite batteries have no risk of explosion and have the advantages of high power efficiency and low pollution so as to be used in replace of the conventional lead-acid, nickel-metal hydride and nickel-cadmium batteries. After years of research, the Lithium Ferric Phosphate Nano-Co-crystalline Olivine (hereinafter referred as "LFP-NCO") battery is developed. The LFP-NCO battery is a single compound consisting of Li, Fe, P and metals or precursor of metal composition, and is a non-coated and non-doped material, so that the LFP-NCO battery can significantly improve the lower conductivity and eliminate impurities. Moreover, the price of the LFP-NCO battery is lower than conventional lithium ferric phosphate materials, in which the LFP-NCO battery has higher market competitiveness and becomes the main product of the industry.

In general, ferric phosphate (FePO₄), lithium hydroxide (LiOH) and lithium carbonate (LiiCOs) are applied to process a reaction of the conventional preparation method of LFP-NCO. However, the production efficiency of the final lithium iron phosphate compound is affected by the state of the iron phosphate precursor before reacting with lithium hydroxide (LiOH) and lithium carbonate (Li₂CO₃). Since the iron phosphate precursor is mainly prepared from iron and phosphoric acid, this reaction process needs to consider the reaction rate, the exothermic influence and the difficulty of manufacturing process operation. Moreover, the product quality is seriously affected by the conversion rate of the obtained iron phosphate precursor.

There is a need of providing a preparation method of an iron phosphate precursor for batteries, so as to improve the product quality, reduce the raw material cost, the time cost and the operational difficulty of the process, and obviate the drawbacks encountered from the prior art.

### SUMMARY OF THE INVENTION

It is an object of the present invention to provide a preparation method of an iron phosphate precursor for batteries, so as to improve the product quality, reduce the raw material cost, the time cost and the operational difficulty of the process.

Another object of the present invention provides a preparation method of an iron phosphate precursor for batteries. By controlling the specification of the raw iron powder, the preparation reaction of the iron phosphate precursor is optimized to avoid the reaction rate being too fast and increasing the difficulty of the manufacturing process operation. On the other hand, in the two-segmented reaction of the phosphoric acid, the deionized water and the iron powder, the phosphoric acid is titrated into the iron powder aqueous solution of the iron powder and the water mixed, so as to prevent the reaction rate between the phosphoric acid and the iron powder from being too fast. Consequently, the aqueous solution won't be heated up too quickly and too high, and the product quality of the iron phosphate precursor won't be affected. Moreover, if the iron powder reactant is not reacted completely, the grinding process can be further cooperated to remove the amorphous iron phosphate coating attached to the surface of the iron powder reactant. In this way, the iron powder reactant can be brought into contact with the phosphoric acid again and the reaction can be fully carried out. Consequently, the waste of raw materials can be reduced significantly and the conversion rate of iron phosphate precursor is improved comprehensively.

A further object of present invention provides a preparation method of an iron phosphate precursor for batteries. Since the two-segmented reaction of the phosphoric acid, the deionized water and the iron powder is implemented through a titration method, it allows the phosphoric acid and the iron powder to react completely at a slower reaction rate, and the effects of significantly reducing the waste of raw materials and comprehensively improving product quality are achieved. Moreover, it avoids to generate a large amount of hydrogen at one time during the reaction period of the phosphoric acid and the iron powder, so that the safety is better. In addition, the titration method can also avoid a violent hydration reaction during the reaction process, which may cause the raw materials to become viscous and lead to poor operability. Furthermore, the preparation method of iron phosphate precursor is further cooperated to form the battery composite material, and it helps to significantly shorten the time required for grinding, thereby reducing the process time and the money costs. At the same time, the pH sensitivity of the manufacturing process can be reduced, the viscosity of the raw material and the blockage of processing pipes are avoided, the processing temperature is stably controlled, and the operational difficulty of the manufacturing process and the mass production line is reduced.

In accordance with an aspect of the present disclosure, there is provided a preparation method of an iron phosphate precursor for batteries. The preparation method includes steps of: (a) providing an iron powder, wherein the iron powder has an apparent density of iron powder ranging from 2.3 g/cm³ to 2.6 g/cm³, and a particle size composed of a first particle-size range and a second particle-size range, the first particle-size range is greater than the second particle-size range, and a weight of the iron powder in the second particle-size range accounts between 10 % and 30 % of the total weight of the iron powder; (b) providing a phosphoric acid to react with the iron powder to generate a first product; and (c) heat-treating the first product in an air or oxygen atmosphere to form the iron phosphate precursor.

In an embodiment, the iron powder has a BET surface area ranging from 700 cm²/g to 1300 cm²/g, the first particle-size range is less than 212 µm and greater than 45 µm, and the second particle-size range is less than or equal to 45 µm.

In an embodiment, the step (c) is performed at a temperature ranging from 610°C to 670°C for a holding time of at least one hour.

In an embodiment, the first particle-size range is less than 212 µm and greater than 45 µm, the second particle-size range is less than or equal to 45 µm, and the weight of the iron powder in the second particle-size range accounts between 10 % and 25 % of the total weight of the iron powder.

In an embodiment, the first product is amorphous phosphates, and the formula of the first product is written as a-FePO₄ • xH₂O, wherein x > 0.

In an embodiment, the step (b) further includes steps of: (b11) allowing deionized water to dissolve the iron powder to form an iron powder aqueous solution at a first temperature; (b12) adding a first amount of the phosphoric acid to the iron powder aqueous solution at a titration rate for reacting under a second temperature, lowering the reaction temperature to a third temperature after the second temperature is reached by the reaction temperature, and then maintaining the reaction temperature for a first time period; and (b13) lowering the reaction temperature to a fourth temperature, adding a second amount of the phosphoric acid, and processing a reaction of the phosphoric acid and the iron powder aqueous solution for a second time period, so as to produce the first product.

In an embodiment, the weight ratio of the first amount and the second amount is greater than 2.5.

In an embodiment, the first temperature ranges from 35 °C to 45 °C, the second temperature is equal to or less than 60 °C, the third temperature is equal to or less than 50 °C, and the fourth temperature is equal to or less than 35 °C.

In an embodiment, the phosphoric acid has a concentration of 85 wt.%, and the titration rate ranges from 10 ml/min to 40 ml/min.

In an embodiment, the first time period is at least 3 hours and the second time period ranges from 5 hours to 9 hours.

In an embodiment, the step (b) further includes steps of: (b21) performing a first grinding action to grind the first product to have a particle size D99 smaller than a first length; and (b22) processing the reaction for a third time period.

In an embodiment, the first length is less than 100 µm, and the third time period ranges from 6 hours to 12 hours.

In an embodiment, the step (b) further includes steps of: (b31) adding a carbon source and a metal compound to form a precursor solution with the first product, and performing a second grinding action; and (b32) performing a spray drying action to the precursor solution when the precursor solution is ground to have a particle size D70 less than a second length in the second grinding action.

In an embodiment, the spray drying action is implemented by a rotary spray dryer, an entrance temperature of the rotary spray dryer is 210 °C, an exit temperature of the rotary spray dryer is 95 °C, and a rotational

In an embodiment, the second length ranges from 1 µm to 10 µm.

In an embodiment, the first grinding action and the second grinding action are performed at a rotational speed ranging from 450 rpm to 650 rpm.

In an embodiment, the metal compound and the iron phosphate precursor form an iron phosphate precursor composite material in the step (c), and are heat-treated to form a battery composite material, wherein the chemical formula of the battery composite material is LiFePO₄, and the metal compound is a lithium-containing- compound.

In an embodiment, the lithium-containing- compound is one selected from the group consisting of lithium hydroxide, lithium carbonate and a mixture thereof, and the battery composite material is a lithium ferric phosphate nano-co-crystalline olivine (LFP-NCO).

In an embodiment, the step (c) includes heat-treating at a temperature of 325°C for 0.5 hours, heat-treating at a temperature of 550°C for 0.5 hours, and heat-treating at a temperature of 650°C for 1 hour.

### BRIEF DESCRIPTION OF THE DRAWINGS

The above contents of the present disclosure will become more readily apparent to those ordinarily skilled in the art after reviewing the following detailed description and accompanying drawings, in which:
FIG. 1 schematically illustrates a flow chart of a preparation method of an iron phosphate precursor for batteries according to an embodiment of the present disclosure;
FIG. 2 schematically illustrates a detailed flow chart of the preparation method of the iron phosphate precursor for the batteries according to an embodiment of the present disclosure;
FIG. 3 shows a titration device used in the preparation method of the iron phosphate precursor for the batteries according the embodiment of the present disclosure;
FIG. 4 schematically illustrates another detailed flow chart of the preparation method of the iron phosphate precursor for the battery according to an embodiment of the present disclosure;
FIG. 5 schematically illustrates a detailed flow chart of the preparation method of the iron phosphate precursor cooperated to form a battery composite material according to an embodiment of the present disclosure; and
FIG. 6 schematically illustrates another detailed flow chart of the preparation method of the iron phosphate precursor cooperated to form the battery composite material according to an embodiment of the present disclosure

### DETAILED DESCRIPTION OF THE PREFERRED EMBODIMENT

The present disclosure will now be described more specifically with reference to the following embodiments. It is to be noted that the following descriptions of preferred embodiments of this disclosure are presented herein for purpose of illustration and description only. It is not intended to be exhaustive or to be limited to the precise form disclosed. For example, the formation of a first feature over or on a second feature in the description that follows may include embodiments in which the first and second features are formed in direct contact, and may also include embodiments in which additional features may be formed between the first and second features, such that the first and second features may not be in direct contact. In addition, the present disclosure may repeat reference numerals and/or letters in the various examples. This repetition is for the purpose of simplicity and clarity and does not in itself dictate a relationship between the various embodiments and/or configurations discussed. Although the wide numerical ranges and parameters of the present disclosure are approximations, numerical values are set forth in the specific examples as precisely as possible. In addition, although the "first," "second," "third," and the like terms in the claims be used to describe the various elements can be appreciated, these elements should not be limited by these terms, and these elements are described in the respective embodiments are used to express the different reference numerals, these terms are only used to distinguish one element from another element. For example, a first element could be termed a second element, and, similarly, a second element could be termed a first element, without departing from the scope of example embodiments. Besides, "and / or" and the like may be used herein for including any or all combinations of one or more of the associated listed items. Alternatively, the word "about" means within an acceptable standard error of ordinary skill in the art-recognized average. In addition to the operation / working examples, or unless otherwise specifically stated otherwise, in all cases, all of the numerical ranges, amounts, values and percentages, such as the number for the herein disclosed materials, time duration, temperature, operating conditions, the ratio of the amount, and the like, should be understood as the word "about" decorator. Accordingly, unless otherwise indicated, the numerical parameters of the present invention and scope of the appended patent proposed is to follow changes in the desired approximations. At least, the number of significant digits for each numerical parameter should at least be reported and explained by conventional rounding technique is applied. Herein, it can be expressed as a range between from one endpoint to the other or both endpoints. Unless otherwise specified, all ranges disclosed herein are inclusive.

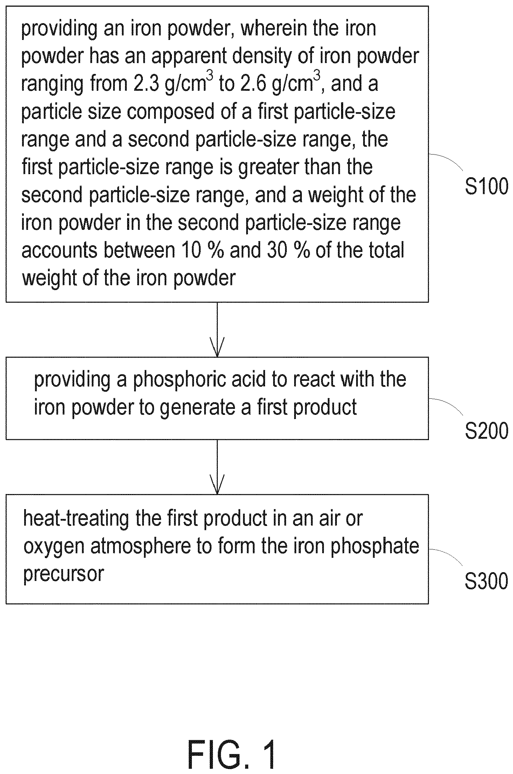

Please refer to FIG. 1. FIG. 1 schematically illustrates a flow chart of a preparation method of an iron phosphate precursor for batteries according to an embodiment of the present disclosure. A preparation method of an iron phosphate precursor of the present disclosure includes steps as follows. At first, as shown in step S100, an iron powder is provided. The formula of the iron powder is written as Fe. In addition, the iron powder has a specific specification, so that the preparation reaction of the iron phosphate precursor is optimized to avoid the reaction rate being too fast, increasing the difficulty of the manufacturing process operation, or causing the safety issues. In the embodiment, the iron powder has an apparent density of the iron powder ranging from 2.3 g/cm³ to 2.6 g/cm³. The particle size of the iron powder is composed of a first particle-size range and a second particle-size range. Preferably but not exclusively, the particle size of the iron powder is divided into two ranges by sieving. In the embodiment, the first particle-size range is the coarse powder less than 212 µm and greater than 45 µm, and the second particle-size range is the fine powder less than or equal to 45 µm. Namely, the first particle-size range is greater than the second particle-size range. A weight of the iron powder in the first particle-size range accounts between 90 % and 70 % of the total weight of the iron powder, and a weight of the iron powder in the second particle-size range accounts between 10 % and 30 % of the total weight of the iron powder. In other words, it allows to sieve the iron powder to obtain a maximum particle size of the iron powder less than 212 µm, and a fine powder weight of the iron powder less than or equal to 45 µm accounts between 10 % and 30 % of the total weight of the iron powder for meeting the requirements. Preferably, the weight of the iron powder in the first particle-size range accounts between 90 % and 75 % of the total weight of the iron powder, and the weight of the iron powder in the second particle-size range accounts between 10 % and 25 % of the total weight of the iron powder. That is, the fine powder weight of the iron powder less than or equal to 45 µm accounts between 10 % and 25 % of the total weight of the iron powder. In the embodiment, the iron powder further has a BET surface area ranging from 700 cm²/g to 1300 cm²/g. Certainly, the first particle-size range and the second particle-size range are adjustable according to the practical requirements. It allows to divide the iron powder into two ranges of the coarse powder and the fine powder by sieving. In the following embodiments, the first particle-size range and the second particle-size range are respectively explained by using the coarse powder of less than 212 µm and greater than 45 µm and the fine powder ≦ 45 µm obtained through sieving, but the present disclosure is not limited thereto.

Next, as shown in the step S200, a phosphoric acid is provided. The formula of the phosphoric acid is written as H₃PO₄, and the phosphoric acid is reacted with the iron powder to generate a first product. In the embodiment, the first product is amorphous phosphates, and the formula of the first product is written as a-FePO₄ • xH₂O, wherein x > 0.

Then, as shown in the step S300, the first product is heat-treated in an air or oxygen atmosphere to form the iron phosphate precursor. In the embodiment, the first product is heat-treated at a temperature ranging from 610°C to 670°C for a holding time of at least one hour. Certainly, the present disclosure is not limited thereto.

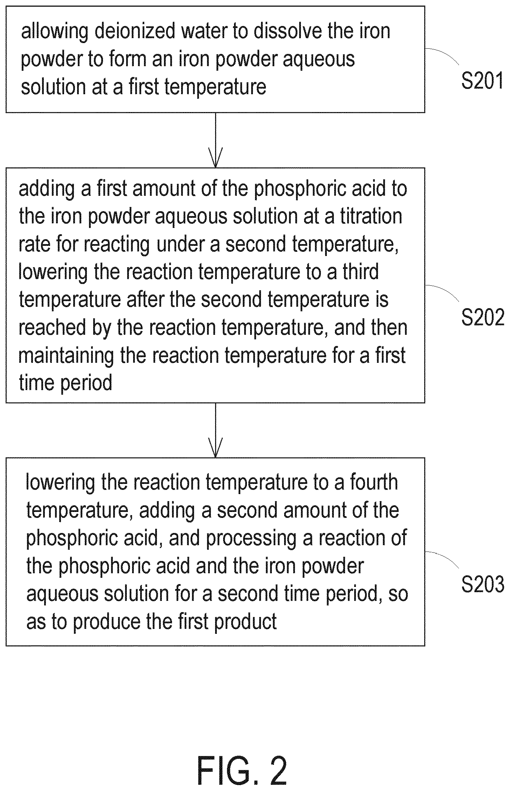

Please refer to FIG. 1 and FIG. 2. FIG. 2 schematically illustrates a detailed flow chart of the preparation method of the iron phosphate precursor for the batteries according to an embodiment of the present disclosure. As shown in FIG. 1 and FIG. 2, the detailed flow chart of the step S200 of the preparation method of the iron phosphate precursor of the present disclosure includes steps as follows. As shown in the step S201, deionized water is allowed to dissolve the iron powder to form an iron powder aqueous solution at a first temperature. Preferably but not exclusively, the first temperature can be preheated to a temperature ranging from 35 °C to 45 °C, and is preferred to be preheated to 42 °C, but not limited thereto. Next, as shown in the step S202, a first amount of the phosphoric acid is added to the iron powder aqueous solution at a titration rate for reacting under a second temperature, the reaction temperature is lowered to a third temperature after the second temperature is reached by the reaction temperature, and then the reaction temperature is maintained at the third temperature for a first time period. In some embodiments, the phosphoric acid may be replaced by a compound releasing phosphate ions in the mixed aqueous solution so as to titrate the iron powder aqueous solution in order to produce the first product, but not limited thereto. In the embodiment, the phosphoric acid has a concentration of 85 wt.%, and the titration rate ranges from 10 ml/min to 40 ml/min. In other embodiments, the concentration of the phosphoric is not limited to 85 wt.%, and the titration rate can be changed according to mass production requirements. The present disclosure is not limited thereto. In addition, the second temperature is equal to or less than 60 °C, and is preferably 60 °C, and the third temperature is equal to or less than 50 °C, and is preferably 35 °C. The first time period is at least 3 hours, and is preferably 3 hours.

In an embodiment, the titration rate of the 85 wt.% phosphoric acid added to the iron powder aqueous solution is controlled, and the completed titration time ranges from 1 hour to 3 hours. When the phosphoric acid titrates and digests the iron powder aqueous solution, it can be adjusted according to the reaction temperature, pH value or gelling state. The first amount of the phosphoric acid is used to titrate the iron powder aqueous solution for reacting, and the reaction temperature is lowered after the reaction temperature reaches 60 °C. After the titration of the first amount of the phosphoric acid is completed or the de-gelling is completed, the reaction temperature is further lowered to 35 °C and maintained for 3 hours, but the present disclosure is not limited thereto. Then, as shown in the step S203, the reaction temperature is lowered to the fourth temperature, a second amount of phosphoric acid is added, and the reaction between the phosphoric acid and the iron powder aqueous solution is continued for a second time to generate the first product.

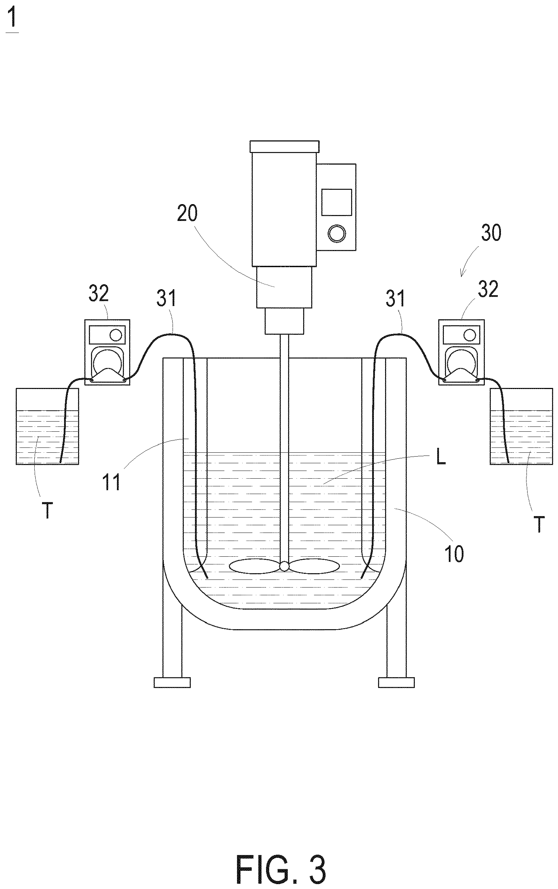

Notably, the device for operating the titration of the first amount of the phosphoric acid into the iron powder aqueous solution needs to consider both safety and operability. It is necessary to avoid generating a large amount of hydrogen at one time FIG. 3 shows a titration device used in the preparation method of the iron phosphate precursor for the batteries according the embodiment of the present disclosure. As shown in FIG. 3, the titration device 1 includes a tank 10 , a stirring module 20 and two feeding modules 30. Preferably but not exclusively, the tank 10 is a reaction tank with a water jacket for controlling the temperature, and configured to provide a space for accommodating the iron powder aqueous solution L and performing a titration reaction. Several baffles 11 are disposed on the inner peripheral wall of the tank 10 to cooperate with the stirring operation of the stirring module 20 to evenly mix the reactants. The phosphoric acid T is titrated into the iron powder aqueous solution L through two sets of feeding modules 30. The feeding module 30 includes a feeding pipe 31 and a peristaltic pump 32. Preferably but not exclusively, the feeding pipe 31 is fixed to the baffle 11 and in fluid communication with the bottom portion of the tank 10. Through the driving of the peristaltic pump 32, the phosphoric acid T can be introduced into the iron powder aqueous solution L from the bottom portion of the tank 10 at a stable titration rate. In one embodiment, the first amount of phosphoric acid T can be used to complete the titration of the iron powder aqueous solution L within 1 hour. Only bubbles are appeared throughout the process but no gelling. The operability is significantly improved. Certainly, the number and arrangement of the feeding modules 30 are adjustable according to the practical requirements, and the present disclosure is not limited thereto.

In the embodiment, the first product is amorphous phosphates, and the formula of the first product is written as a-FePO₄ • xH₂O (x>0). The fourth temperature is equal to or less than 30 °C, and is preferably 30 °C. The second time period ranges from 5 hours to 9 hours. Moreover, the weight ratio of the first amount and the second amount is greater than 2.5. Preferably but not exclusively, the weight ratio of the first amount to the second amount is 3, i.e. the first amount is 75% and the second amount is 25%. Certainly, the present disclosure is not limited thereto.

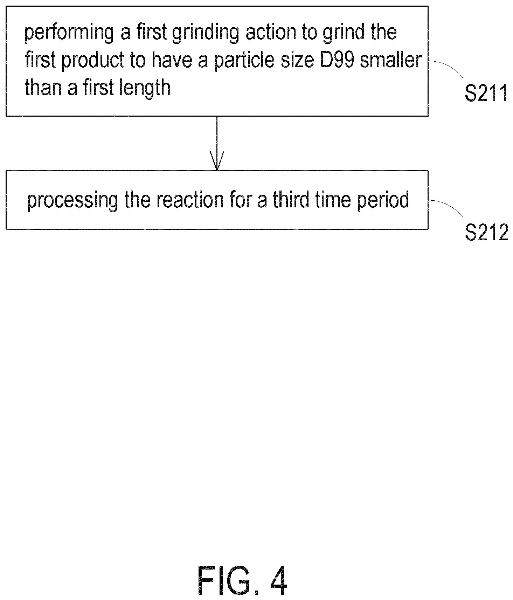

Please refer to FIG. 1 and FIG. 4. FIG. 4 schematically illustrates another detailed flow chart of the preparation method of the iron phosphate precursor for the batteries according to an embodiment of the present disclosure. As shown in FIG. 1 and FIG. 4, the detailed flow chart of the step S200 of the preparation method of the iron phosphate precursor of the present disclosure further includes steps as follows. As shown in the step 211, after the aforementioned reaction is processed for 5 hours to 9 hours, a first grinding action is performed to grind the first product to have a particle size D99 smaller than a first length. Then, as shown in the step S212, the reaction is further processed for a third time period to complete the reaction between phosphoric acid and iron powder. In the embodiment, the iron powder has the specific specification. Although the metal powder has the characteristic of fast reaction speed, it is easy to form a barrier on the surface of the powder due to the too fast reaction speed. In the embodiment, if the iron powder reactant is not reacted completely, the grinding process can be cooperated to remove the amorphous iron phosphate coating attached to the surface of the iron powder reactant. In this way, the iron powder reactant can be brought into contact with the phosphoric acid again and the reaction can be fully carried out. Consequently, the waste of raw materials can be reduced significantly and the conversion rate of iron phosphate precursor is improved comprehensively. Certainly, in other embodiments, the first grinding action in the step S211 can be omitted, and the present disclosure is not limited thereto.

Preferably but not exclusively, in the embodiment, the first length is less than 100 µm, and the third time period ranges from 6 hours to 12 hours. In the embodiment, the first grinding action is performed at a first rotational speed. Preferably but not exclusively, the first rotational speed ranges from 450 rpm to 650 rpm, and is preferably 550 rpm. Thereby, in the two-segmented reaction of the phosphoric the acid, deionized water and the iron powder, the phosphoric acid solution and the iron powder can fully react. Consequently, the waste of raw materials can be reduced significantly and the conversion rate of iron phosphate precursor is improved comprehensively.

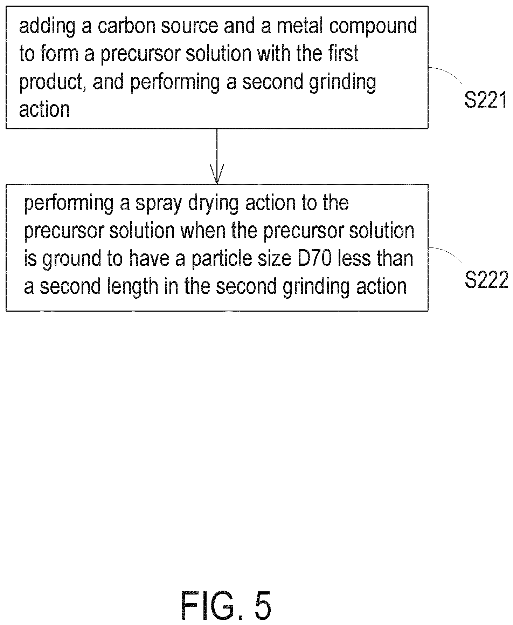

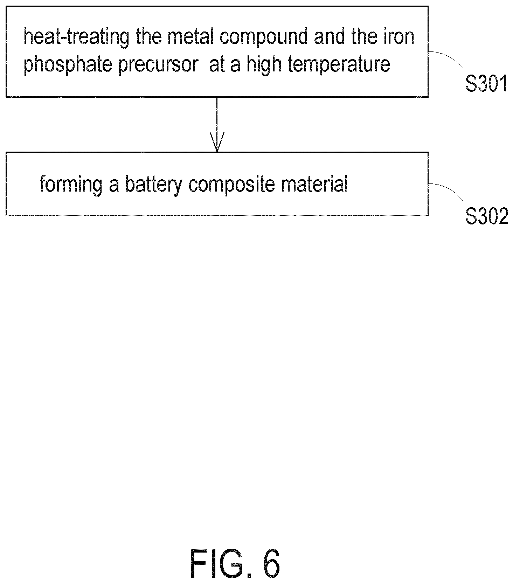

Notably, it allows the preparation method of iron phosphate precursor of the present disclosure to cooperate the preparation of the battery composite material. FIG. 5 schematically illustrates a detailed flow chart of the preparation method of the iron phosphate precursor cooperated to form a battery composite material according to an embodiment of the present disclosure. FIG. 6 schematically illustrates another detailed flow chart of the preparation method of the iron phosphate precursor cooperated to form the battery composite material according to an embodiment of the present disclosure. In the embodiment, as shown in the step S221, a carbon source and a metal compound for producing the battery composite material are added into the first product, which is formed through the sufficient reaction between the aforementioned phosphoric acid solution and the iron powder, so that a precursor solution is formed by the carbon source, the metal compound and the first product, and a second grinding action is further performed. Preferably but not exclusively, in the embodiment, the carbon source is carbohydrate, organic compound, polymer or macromolecular material. In some embodiments, the carbohydrate is not limited to fructose, sucrose, lactose or galactose. The macromolecule material is not limited to polyvinylpyrrolidone, and the formula of the macromolecule material is written as (C₆H₉NO)ₙ, among which n is a natural number, and the IUPAC name of the macromolecule material is PVP. In the embodiment, the metal compound is one selected from the group consisting of lithium hydroxide (LiOH), lithium carbonate (Li₂CO₃), a compound consisting of lithium, and a mixture of several compounds consisting of lithium, but not limited thereto.

Then, as shown in the step S222, a spray drying action is performed to the precursor solution when the precursor solution is ground to have a particle size D70 less than a second length in the second grinding action. Preferably but not exclusively, in the embodiment, the second grinding action is performed at the identical rotational speed of the first grinding action, and the rotational speed ranges from 450 rpm to 650 rpm. In the embodiment, the spray drying action is implemented by a rotary spray dryer, an entrance temperature of the rotary spray dryer is 210 °C, an exit temperature of the rotary spray dryer is 95 °C, and a rotational speed of the rotary spray dryer ranges from 300 Hz to 400 Hz, but not limited thereto. In the embodiment, the carbon source is added mainly to block grain growth and avoid excessive melting. The conventional dispersant used in spray drying moving parts is a dispersant containing metal ions. However, in the present disclosure, the carbon source is used to replace the conventional dispersant. Since the carbon source is an organic compound, it can not only serve as an auxiliary function as a dispersant, but can also be removed by subsequent heat-treating in air or oxygen. No other metal cations remain, so the purity of the product is further improved. Certainly, the present disclosure is not limited thereto.

As shown in the step S301, after the spray drying action, the metal compound and the iron phosphate precursor are heat-treated at a high temperature and spray-dried. In the embodiment, the metal compound and the iron phosphate precursor spray-dried are placed in air or oxygen atmosphere, heat-treated at a temperature of 325°C for 0.5 hours firstly, heat-treated at a temperature of 550°C for 0.5 hours, and then heat-treating at a temperature of 650°C for 1 hour. Finally, as shown in the step S302, the iron phosphate precursor composite material formed by the metal compound and the iron phosphate precursor is heat-treated to form a battery composite material. Preferably but not exclusively, the battery composite material is for example LiFePO₄. In other embodiment, the metal oxide, such as V₂O₅ or MgO, can be added into the step S221, so that a LiFePO₄-like material consisting of the metal oxide is produced, which can be called or named "lithium ferric phosphate nano-co-crystalline olivine (LFP-NCO)".

It can be seen that, in two-segmented reaction of the phosphoric acid, the deionized water and the iron powder in the present disclosure, the phosphoric acid is titrated into the iron powder aqueous solution of the iron powder and the water mixed, so as to avoid the reaction rate of the phosphoric acid and the iron powder being too fast, causing the temperature of the aqueous solution to heat up too quickly, and affecting the product quality of the iron phosphate precursor. Moreover, the rate of hydrogen production and the occurrence of hydration reaction can be slowed down at the same time, so that the safety and the operability of raw materials are improved. On the other hand, it allows to cooperate the preparation method of iron phosphate precursor with the preparation of the battery composite material, and it helps to significantly shorten the time required for grinding, thereby reducing the process time and the money costs. At the same time, combined with the changes in many parameters mentioned above, the pH sensitivity of the manufacturing process can be reduced, the viscosity of the raw material and the blockage of processing pipes are avoided, the processing temperature is stably controlled, and the operational difficulty of the manufacturing process and the mass production line is reduced.

The following embodiment is presented herein for purpose of illustration and description of the preparation method of the iron phosphate precursor of the present disclosure.

### Example 1:

At first, 9000 ml deionized water and 2476 grams of iron powder (Purity>99%) are provided. The iron powder has the apparent density of the iron powder ranging from 2.3 g/cm³ to 2.6 g/cm³, the maximum particle size of the iron powder is less than 212 µm, and the fine powder weight of the iron powder less than or equal to 45 µm is 21.6 % of the total weight of the iron powder. The deionized water is allowed to dissolve the iron powder to form an iron powder aqueous solution, and the iron powder aqueous solution is preheated to a temperature of 42 °C. A first amount of 3760 grams phosphoric acid (Purity>85%) is added to the iron powder aqueous solution at a titration rate of 37 ml/min for reacting. The reaction temperature reaches 60 °C in about 54 minutes. When the reaction temperature reaches above 60°C, the temperature is lowered to prevent the reaction from being too fast and causing the iron powder to not completely react with the phosphoric acid. The titration of the first amount of the phosphoric acid is completed within 1 hour, and then the temperature is lowered to 35°C after de-gelling is completed. Thereafter, a second amount of 1467 grams phosphoric acid is added directly, and then the mixed solution is stirred and left to stand for 24 hours, so that the iron powder and the phosphoric acid in the aqueous solution can fully react to form the first product. The first product contained in the aqueous solution is spray-dried and then heat-treated continuously at a temperature ranging from 610°C to 670°C for a holding time of at least one hour to obtain the iron phosphate precursor, FePO₄.

### Example 2:

In Example 2, 9000 ml deionized water and 2476 grams of iron powder (Purity>99%) are provided firstly. The iron powder has the apparent density of the iron powder ranging from 2.3 g/cm³ to 2.6 g/cm³, the maximum particle size of the iron powder is less than 212 µm, and the fine powder weight of the iron powder less than or equal to 45 µm is 21.6 % of the total weight of the iron powder. The deionized water is allowed to dissolve the iron powder to form an iron powder aqueous solution, and the iron powder aqueous solution is preheated to a temperature of 42 °C. A first amount of 3760 grams phosphoric acid (Purity>85%) is added to the iron powder aqueous solution at a titration rate of 12.4 ml/min for reacting. The reaction temperature reaches the highest temperature of 56.9 °C in about 146 minutes. The titration of the first amount of the phosphoric acid is completed within 1 hour, and then the temperature is lowered to 35 °C after de-gelling is completed. Thereafter, a second amount of 1467 grams phosphoric acid is added directly, and then the mixed solution is stirred and left to stand for 24 hours, so that the iron powder and the phosphoric acid in the aqueous solution can fully react to form the first product. The first product contained in the aqueous solution is spray-dried and then heat-treated continuously at a temperature ranging from 610 °C to 670 °C for a holding time of at least one hour to obtain the iron phosphate precursor, FePO₄.

### Comparative Example 1:

In Comparative Example 1, 9000 ml deionized water and 2476 grams of iron powder (Purity>99%) are provided firstly. The iron powder has the apparent density of the iron powder ranging from 2.3 g/cm³ to 2.6 g/cm³, the maximum particle size of the iron powder is less than 212 µm, and the fine powder weight of the iron powder less than or equal to 45 µm is 21.6 % of the total weight of the iron powder. The deionized water is allowed to dissolve the iron powder to form an iron powder aqueous solution, and the iron powder aqueous solution is preheated to a temperature of 42 °C. A first amount of 3760 grams phosphoric acid (Purity>85%) is directly added to the iron powder aqueous solution in one time for reacting. The reaction temperature reaches 60 °C in about 9 minutes. When the reaction temperature reaches above 60 °C, the temperature is lowered to prevent the reaction from being too fast and causing the iron powder to not completely react with the phosphoric acid. After de-gelling is completed, the temperature is lowered to 35 °C. Thereafter, a second amount of 1467 grams phosphoric acid is added directly, and then the mixed solution is stirred and left to stand for 24 hours, so that the iron powder and the phosphoric acid in the aqueous solution react to form the first product. The first product contained in the aqueous solution is spray-dried and then heat-treated continuously at a temperature ranging from 610°C to 670°C for a holding time of at least one hour to obtain the iron phosphate precursor, FePO₄.

After adding the first amount of phosphoric acid to the iron powder aqueous solution, the reaction temperature of Comparative Example 1 reaches 60 °C in about 9 minutes, the reaction temperature of Example 1 reaches 60 °C in about 54 minutes, and the reaction temperature of Example 2 reaches the highest temperature of 56.9 °C in about 146 minutes. According the above results, in the reaction of the first amount of the phosphoric acid titrated into the iron powder aqueous solution, the time required to reach 60 °C (or the highest temperature) is negatively correlated with the titration rate.

Furthermore, in Example 1, after the titration of the first amount of the phosphoric acid titrated into the iron powder aqueous solution is completed within 1 hour, the pH value is returned to a higher value, which means that the first amount of the phosphoric acid titration in Example 1 is more completely consumed for titration. After adding the second amount of the phosphoric acid, the pH value change has the similar change. The pH value recovery in Example 1 is better than the pH value recovery in Example 2. In other embodiments, the stability of the pH value is not limited to the control of the titration rate. Certainly, the titration rate of the phosphoric acid and the total titration time are adjustable according to the practical requirements and related to the titration device.

From the above, in the preparation method of the iron phosphate precursor for the batteries according to the present disclosure, the specification of the raw iron powder is controlled, and the phosphoric acid is added in safe titration method into the iron powder aqueous solution of the iron powder and the water mixed. The titration time is controlled to be completed within 1 hour. In that, the reaction between the phosphoric acid and the iron powder can be achieved at an optimized reaction rate to improve the product quality, reduce the raw material cost, the time cost and the operational difficulty of the process. In addition, the amorphous iron phosphate formed from the iron phosphate precursor can be ground by adding the carbon source as a dispersant to adjust the viscosity and reduce the operational difficulty of the process. Through the two-segmented reaction of the phosphoric the acid, deionized water and the iron powder, the phosphoric acid solution and the iron powder can fully react. In case of cooperating the preparation method of the iron phosphate precursor with the preparation of the battery composite material, it helps to significantly shorten the time required for grinding, thereby reducing the process time and the money costs. At the same time, combined with the changes in many parameters mentioned above, the pH sensitivity of the manufacturing process can be reduced, the viscosity of the raw material and the blockage of processing pipes are avoided, the processing temperature is stably controlled, and the operational difficulty of the manufacturing process and the mass production line is reduced. Certainly, the applications of the iron phosphate precursor in this present disclosure is not limited thereto, and will not be redundantly described hereafter.

In summary, the present disclosure provides a preparation method of an iron phosphate precursor for batteries, so as to improve the product quality, reduce the raw material cost, the time cost and the operational difficulty of the process. By controlling the specification of the raw iron powder, the preparation reaction of the iron phosphate precursor is optimized to avoid the reaction rate being too fast and increasing the difficulty of the manufacturing process operation. On the other hand, in the two-segmented reaction of the phosphoric acid, the deionized water and the iron powder, the phosphoric acid is titrated into the iron powder aqueous solution of the iron powder and the water mixed, so as to prevent the reaction rate between the phosphoric acid and the iron powder from being too fast. Consequently, the aqueous solution won't be heated up too quickly and too high, the product quality of the iron phosphate precursor won't be affected, and the rapid generation of a large amount of hydrogen and poor safety are avoided. Moreover, if the iron powder reactant is not reacted completely, the grinding process can be further cooperated to remove the amorphous iron phosphate coating attached to the surface of the iron powder reactant. In this way, the iron powder reactant can be brought into contact with the phosphoric acid again and the reaction can be fully carried out. Consequently, the waste of raw materials can be reduced significantly and the conversion rate of iron phosphate precursor is improved comprehensively. Through the two-segmented reaction of the phosphoric acid, the deionized water and the iron powder, it ensures the full reaction of phosphoric acid and iron powder, and achieves the effects of significantly reducing the waste of raw materials and comprehensively improving product quality. Furthermore, the preparation method of iron phosphate precursor is further cooperated to form the battery composite material, and it helps to significantly shorten the time required for grinding, thereby reducing the process time and the money costs. At the same time, the pH sensitivity of the manufacturing process can be reduced, the viscosity of the raw material and the blockage of processing pipes are avoided, the processing temperature is stably controlled, and the operational difficulty of the manufacturing process and the mass production line is reduced.

## Claims

1. A preparation method of an iron phosphate precursor for batteries, **characterized by** comprising steps of:
(a) providing an iron powder, wherein the iron powder has an apparent density of iron powder ranging from 2.3 g/cm³ to 2.6 g/cm³, and a particle size composed of a first particle-size range and a second particle-size range, the first particle-size range is greater than the second particle-size range, and a weight of the iron powder in the second particle-size range accounts between 10 % and 30 % of the total weight of the iron powder;
(b) providing a phosphoric acid to react with the iron powder to generate a first product; and
(c) heat-treating the first product in an air or oxygen atmosphere to form the iron phosphate precursor.

2. The preparation method of the iron phosphate precursor for the batteries according to claim 1, wherein the iron powder has a BET surface area ranging from 700 cm²/g to 1300 cm²/g, the first particle-size range is less than 212 µm and greater than 45 µm, and the second particle-size range is less than or equal to 45 µm.

3. The preparation method of the iron phosphate precursor for the batteries according to claim 1 or 2, wherein the step (c) is performed at a temperature ranging from 610°C to 670°C for a holding time of at least one hour.

4. The preparation method of the iron phosphate precursor for the batteries according to any of the claims 1 to 3, wherein the first particle-size range is less than 212 µm and greater than 45 µm, the second particle-size range is less than or equal to 45 µm, and the weight of the iron powder in the second particle-size range accounts between 10 % and 25 % of the total weight of the iron powder.

5. The preparation method of the iron phosphate precursor for the batteries according to any of the claims 1 to 4, wherein the first product is amorphous phosphates, and the formula of the first product is written as a-FePO₄ • xH₂O, wherein x > 0.

6. The preparation method of the iron phosphate precursor for the batteries according to claim 1, wherein the step (b) further comprises steps of:
(b11) allowing deionized water to dissolve the iron powder to form an iron powder aqueous solution at a first temperature;
(b12) adding a first amount of the phosphoric acid to the iron powder aqueous solution at a titration rate for reacting under a second temperature, lowering the reaction temperature to a third temperature after the second temperature is reached by the reaction temperature, and then maintaining the reaction temperature for a first time period; and
(b13) lowering the reaction temperature to a fourth temperature, adding a second amount of the phosphoric acid, and processing a reaction of the phosphoric acid and the iron powder aqueous solution for a second time period, so as to produce the first product.

7. The preparation method of the iron phosphate precursor for the batteries according to claim 6, wherein the weight ratio of the first amount and the second amount is greater than 2.5, wherein the first temperature ranges from 35 °C to 45 °C, the second temperature is equal to or less than 60 °C, the third temperature is equal to or less than 50 °C, and the fourth temperature is equal to or less than 35 °C.

8. The preparation method of the iron phosphate precursor for the batteries according to claim 6 or 7, wherein the phosphoric acid has a concentration of 85 wt.%, and the titration rate ranges from 10 ml/min to 40 ml/min.

9. The preparation method of the iron phosphate precursor for the batteries according to any of the claims 6 to 8, wherein the first time period is at least 3 hours and the second time period ranges from 5 hours to 9 hours.

10. The preparation method of the iron phosphate precursor for the batteries according to any of the claims 6 to 9, wherein the step (b) further comprises steps of:
(b21) performing a first grinding action to grind the first product to have a particle size D99 smaller than a first length; and
(b22) processing the reaction for a third time period.

11. The preparation method of the iron phosphate precursor for the batteries according to claim 10, wherein the first length is less than 100 µm, and the third time period ranges from 6 hours to 12 hours.

12. The preparation method of the iron phosphate precursor for the batteries according to claim 10 or 11, wherein the step (b) further comprises steps of:
(b31) adding a carbon source and a metal compound to form a precursor solution with the first product, and performing a second grinding action; and
(b32) performing a spray drying action to the precursor solution when the precursor solution is ground to have a particle size D70 less than a second length in the second grinding action.

13. The preparation method of the iron phosphate precursor for the batteries according to claim 12, wherein the spray drying action is implemented by a rotary spray dryer, an entrance temperature of the rotary spray dryer is 210 °C, an exit temperature of the rotary spray dryer is 95 °C, and a rotational speed of the rotary spray dryer ranges from 300 Hz to 400 Hz, wherein the second length ranges from 1 µm to 10 µm, wherein the first grinding action and the second grinding action are performed at a rotational speed ranging from 450 rpm to 650 rpm.

14. The preparation method of the iron phosphate precursor for the batteries according to claim 12 or 13, wherein the metal compound and the iron phosphate precursor form an iron phosphate precursor composite material in the step (c), and are heat-treated to form a battery composite material, wherein the chemical formula of the battery composite material is LiFePO₄, and the metal compound is a lithium-containing- compound.

15. The preparation method of the iron phosphate precursor for the batteries according to claim 14, wherein the lithium-containing- compound is one selected from the group consisting of lithium hydroxide, lithium carbonate and a mixture thereof, and the battery composite material is a lithium ferric phosphate nano-co-crystalline olivine (LFP-NCO), wherein the step (c) includes heat-treating at a temperature of 325°C for 0.5 hours, heat-treating at a temperature of 550°C for 0.5 hours, and heat-treating at a temperature of 650°C for 1 hour.
